(19) **Europäisches Patentamt / European Patent Office / Office européen des brevets**

(11) **EP 3 815 230 B1**

(12) **EUROPÄISCHE PATENTSCHRIFT**

(45) Veröffentlichungstag und Bekanntmachung des Hinweises auf die Patenterteilung:
**22.07.2026 Patentblatt 2026/30**

(21) Anmeldenummer: **19728991.1**

(22) Anmeldetag: **06.06.2019**

(51) Internationale Patentklassifikation (IPC):
**H02M 1/32** *(2007.01)*

(52) Gemeinsame Patentklassifikation (CPC):
**H02M 1/32;** H02M 1/322; Y02T 10/64; Y02T 10/70

(86) Internationale Anmeldenummer:
**PCT/EP2019/064763**

(87) Internationale Veröffentlichungsnummer:
**WO 2020/001951 (02.01.2020 Gazette 2020/01)**

(54) **STEUERUNGSEINRICHTUNG SOWIE VERFAHREN ZUM ENTLADEN EINES ZWISCHENKREISKONDENSATORS, STROMRICHTER UND FAHRZEUG**

CONTROL DEVICE AND METHOD FOR DISCHARGING A LINK CAPACITOR, POWER CONVERTER AND VEHICLE

DISPOSITIF DE COMMANDE AINSI QUE PROCÉDÉ POUR LA DÉCHARGE D'UN CONDENSATEUR DE CIRCUIT INTERMÉDIAIRE, CONVERTISSEUR DE COURANT ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2018 DE 102018115295**

(43) Veröffentlichungstag der Anmeldung:
**05.05.2021 Patentblatt 2021/18**

(73) Patentinhaber: **Valeo Electrification 95892 Cergy Pontoise (FR)**

(72) Erfinder:
- **EDELHÄUSER, Rainer**
  **90411 Nürnberg (DE)**
- **ERDTMANN, Philipp**
  **90542 Eckental (DE)**
- **GÖTZE, Thomas**
  **91315 Höchstadt/Aisch (DE)**
- **HUBNER, Philip**
  **91052 Erlangen (DE)**

(56) Entgegenhaltungen:
| | |
|---|---|
| CN-A- 102 437 771 | CN-U- 206 481 057 |
| DE-A1- 102012 203 073 | US-A1- 2011 260 661 |
| US-A1- 2013 234 510 | US-A1- 2018 079 315 |

**Beschreibung**

Die vorliegende Erfindung betrifft eine Steuerungseinrichtung zum Entladen eines Zwischenkreiskondensators mittels einer Entladeeinrichtung mit einem Lastwiderstand und einem zum Lastwiderstand in Reihe geschalteten Schaltelement.

Daneben betrifft die Erfindung einen Stromrichter, ein Fahrzeug und ein Verfahren zum Entladen eines Zwischenkreiskondensators.

Die US 2013/234510 A1 offenbart ein elektrischen Fahrzeugmotorantriebssystem mit einem Glättungskondensator und einem dazu parallel geschalteten Entladeschaltkreis, welcher ein Entladeschaltelement und einen Entladewiderstand aufweist. Eine Entladesteuerungseinrichtung weist einen Tastverhältniserzeugungsschaltkreis auf, der ein gepulstes Ein- und Ausschalten des Entladeschaltelement steuert. Eine CPU des Tastverhältniserzeugungsschaltkreises setzt das Tastverhältnis so, dass es umgekehrt proportional zum Quadrat einer Spannung über dem Glättungskondensator steigt.

Die CN 102 437 771 A offenbart einen Wechselrichter mit einem Zwischenkreiskondensator. Eine Entladeschaltung aus einem Entladewiderstand einem Transistor wird pulsweitenmoduliert über eine Schaltung aus einem Komparator, dessen ersten Eingang mit einem Dreieckgenerator verbunden ist, angesteuert. Ein zweiter Eingang des Komparators erhält über einen Reihenschaltung von sechs Widerständen, die parallel zum Zwischenkreiskondensator geschaltet ist, eine zwischen dem fünften und sechsten Widerstand abgegriffene Spannung.

Die DE 10 2012 203073 A1 beschreibt, dass es verschiedene Möglichkeiten zum schnellen Entladen eines Zwischenkreiskondensators gebe. Manchmal werde eine Entladeelektronik mit einer Reihenschaltung eines strom- oder temperaturüberwachten Widerstandes und eines Hochvolt-Schalters zwischen Plus- und Minuspol der Hochvoltversorgung verwendet, um den Kondensator zu entladen. Denkbar sei ferner die Verwendung einer Entladeelektronik mit einer Reihenschaltung eines Widerstandes und eines Hochvolt-Schalters zwischen Plus- und Minuspol der Hochvoltversorgung. Der Schalter werde hierbei getaktet betrieben.

Aus der US 2011/260661 A1 ist ein elektrisches Antriebssystem mit einer Steuerungseinheit bekannt, die ein Tastverhältnis einer Pulsweitenmodulation für einen Bremswiderstand ermittelt.

Zwischenkreiskondensatoren speichern eine Gleichspannung, die beispielsweise in einem Stromrichter in einen mehrphasigen Wechselstrom zur Versorgung eines Elektromotors gewandelt wird. Bei Vorliegen eines Entladeereignisses, z.B. beim Abstellen des Elektromotors, bei einem Fehler oder bei einem Unfall eines den Stromrichter aufweisenden Fahrzeugs, soll der Zwischenkreiskondensator zügig auf eine ungefährliche Spannung entladen werden, um die elektrische Sicherheit zu gewährleisten. Bei der Verwendung einer Entladeeinrichtung mit einem Lastwiderstand und einem zum Lastwiderstand in Reihe geschalteten Schaltelement wird das Schaltelement bei Vorliegen des Entladeereignisses geschlossen, um im Zwischenkreiskondensator gespeicherte Energie in Wärme umzusetzen.

Aus der DE 10 2013 224 884 A1 ist eine solche Vorrichtung zum Entladen eines Zwischenkreiskondensators in einem Spannungsumrichter mit einer elektrischen Last und einem Entladeregler bekannt. Der Entladeregler ist dazu ausgelegt, den Zwischenkreiskondensator über die elektrische Last mit einem vorbestimmten Entladestrom zu entladen. Der Entladeregler ermöglicht einen zumindest annähernd konstanten Entladestrom und umfasst einen Operationsverstärker, der einen Leistungstransistor so ansteuert, dass die Entladung mit dem vorbestimmten Entladestrom erfolgt.

Dadurch kann zwar eine annähernd konstante Leistungsaufnahme des Lastwiderstands erreicht werden. Der Leistungstransistor bzw. das Schaltelement wird jedoch in seinem aktiven Bereich betrieben und setzt selbst einen erheblichen Anteil der gespeicherten Energie in Wärme um. Die gleichmäßige Leistungsaufnahme durch den Lastwiderstand wird so durch eine variable Leistungsaufnahme des Schaltelements erkauft. Das Schaltelement muss für entsprechend hohe Leistungsaufnahmen dimensioniert werden, was den Bauteilaufwand erhöht.

Der Erfindung liegt mithin die Aufgabe zugrunde, eine aufwandsärmere Möglichkeit zum Entladen eines Zwischenkreiskondensators anzugeben.

Diese Aufgabe wird erfindungsgemäß gelöst durch eine Steuerungseinrichtung gemäß Anspruch 1. Vorteilhafte Ausgestaltungen sind Gegenstand der abhängigen Ansprüche.

Die Erfindung beruht auf der Überlegung, das Schaltelement durch das pulsweitenmodulierte Ansteuersignal lediglich im Schaltbetrieb zu betreiben, wobei anhand des Tastverhältnisses ein getakteter, durch den Lastwiderstand fließender Strom vorgegeben wird. Vorteilhafterweise kann so einerseits das Schaltelement hinsichtlich seiner Verlustleistung nur für den Schaltbetrieb und nicht für den aktiven Betrieb und andererseits der Lastwiderstand anhand einer im zeitlichen Mittel an ihm entstehenden Verlustleistung ausgelegt werden.

Der Begriff "im zeitlichen Mittel" bedeutet im Sinne der vorliegenden Erfindung einen gleitenden Mittelwert über einige Perioden des pulsweitenmodulierten Ansteuersignals oder einen gewichteten Mittelwert, so dass der gemittelte Wert im Wesentlichen nur eine Taktung durch die Pulsweitemodulation ausgleicht. Dabei wird zweckmäßigerweise eine Periodendauer des Ansteuersignals so gewählt, dass sie unterhalb einer thermischen Zeitkonstante des Lastwiderstands, ggf. unter zusätzlicher Berücksichtigung von Kühlungsverhältnissen am Lastwiderstand, liegt. Dieser mittelt wegen seiner thermischen Kapazität eine durch den Strom verursachte thermische Leistungsaufnahme.

Es wird bevorzugt, dass die Steuerungseinheit dazu eingerichtet ist, das Tastverhältnis derart zu ermitteln, dass der Entladestrom eine im zeitlichen Mittel im Wesentlichen konstante Leistungsaufnahme durch den Lastwiderstand bewirkt. Der Lastwiderstand muss also nur eine solche maximale Leistungsaufnahme ermöglichen, wie sie der konstanten Entladeleistung entspricht. Der Lastwiderstand ist im Vergleich zu einem kontinuierlichen Strom durch ihn mithin nicht zur Aufnahme hoher, zeitweise auftretender Spitzenleistungen bzw. Spitzströme auszulegen und kann folglich kleinbauender und günstiger gewählt werden. Aufgrund der thermischen Kapazität des Lastwiderstands kann dennoch der während einer Einschaltzeit des Ansteuersignals fließende Strom ohne eine Beschädigung des Lastwiderstands fließen, da die Dauer der Einschaltzeit klein im Vergleich zur thermischen Zeitkonstante des Lastwiderstands ist. Die Leistungsaufnahme kann dabei anhand einer maximalen im Zwischenkreiskondensator gespeicherten Energie und einer vorgegeben Entladezeit bestimmt werden.

Erfindungsgemäß ist die Steuerungseinheit dazu eingerichtet, das Tastverhältnis in Abhängigkeit einer eine über dem Zwischenkreiskondensator abfallende Zwischenkreisspannung beschreibenden Spannungsinformation zu ermitteln. Dabei wird erfindungsgemäß mit sinkender Zwischenkreisspannung ein größerer Entladestrom, also ein größeres Tastverhältnis des Ansteuersignals, vorgegeben.

Gemäß einer bevorzugten Ausführungsform weist die Steuerungseinheit eine Sollwertermittlungseinheit auf, die zum Ermitteln eines Entladestromsollwerts in Abhängigkeit der Spannungsinformation eingerichtet ist. Der Entladestromsollwert ist dabei bevorzugt derart gewählt, dass die quadratische Abhängigkeit der Leistungsaufnahme des Lastwiderstands von der über ihm abfallenden Spannung ($P = U^2 / R$) kompensiert wird. Eine optimale Kompensation ergibt sich dabei, wenn der Entladestromsollwert dem Quotienten aus der Leistungsaufnahme des Lastwiderstands und der Zwischenkreisspannung entspricht.

Die Sollwertermittlungseinheit kann dazu eingerichtet sein, den Entladestromsollwert in Abhängigkeit einer Inversen, insbesondere eines Negativwerts, der Zwischenkreisspannung zu ermitteln Die Verwendung des Negativwerts approximiert dabei eine Inverse in Form eines Kehrwerts der Zwischenkreisspannung, was eine einfachere schaltungstechnische Realisierung erlaubt. Mit anderen Worten spiegelt die der Negativwert den Verlauf der Zwischenkreisspannung. Zweckmäßigerweise ist die Sollwertermittlungseinheit ferner dazu eingerichtet, den Entladestromsollwert als Summe aus der Inversen und einem Offset zu ermitteln.

Erfindungsgemäß ist ferner vorgesehen, dass die Steuerungseinheit zum Ermitteln des Tastverhältnisses in Abhängigkeit einer Strominformation, die ein zeitliches Mittel eines durch den Lastwiderstand fließenden Stroms beschreibt, eingerichtet ist. Durch das Ermitteln der Strominformation konditioniert die Steuerungseinrichtung den getakteten Strom durch den Lastwiderstand. Dazu kann die Steuerungseinrichtung eine Tiefpasseinheit umfassen, welche zum Erzeugen der Strominformation aus einem den momentanen Strom durch den Lastwiderstand beschreibenden Strommesswert eingerichtet ist. Mit anderen Worten konditioniert die Tiefpasseinheit den durch das pulsweitenmodulierte Ansteuersignal getakteten Strommesswert. Die Tiefpasseinheit kann ein RC-Glied, ein Halteglied oder eine sonstige glättende oder mittelwertbildende Schaltung aufweisen.

Um eine Regelung des Entladevorgangs zu ermöglichen, kann die Steuerungseinheit eine Reglereinheit umfassen, welche zum Ermitteln des Tastverhältnisses in Abhängigkeit einer Abweichung des zeitlichen Mittels des Stroms vom Entladestromsollwert eingerichtet ist. Die Reglereinheit kann P-Verhalten oder PI-Verhalten oder PID-Verhalten aufweisen. Dabei wird typischerweise bei einem gleichbleibenden Entladestromsollwert eine Tendenz des im zeitlichen Mittel fließenden Stroms, insbesondere mit fallender Spannung, kleiner zu werden, durch ein entsprechend größeres Tastverhältnis ausgeglichen. Die Berücksichtigung des durch den Lastwiderstand fließenden Stroms ermöglicht insbesondere eine Steuerung des Entladestroms, die weitestgehend unabhängig von fertigungsbedingten Variationen des Widerstandswerts des Ladwiderstands ist. Dies verringert vorteilhafterweise die Präzisionsanforderungen an den Lastwiderstand.

Bei der erfindungsgemäßen Steuerungseinrichtung ist die Steuerungseinheit bevorzugt als Analogschaltung ausgebildet. Dies hat im Hinblick auf automotive Anwendungszwecke den Vorteil, dass auf Standardbauelemente zur Realisierung der Steuerungseinheit zurückgegriffen werden kann und so ein Zertifizierungsaufwand im Hinblick auf ein einzuhaltendes Automotive Safety Integrity Level (ASIL) gering gehalten wird. Alternativ kann die Steuerungseinheit als Mikroprozessor ausgebildet sein. Dies gilt insbesondere bei der Berechnung des Entladestroms gemäß der zuvor beschriebenen zweiten Ausführungsform, bei der insbesondere auf die Ermittlung des Entladestromsollwerts und der Strominformation verzichtet wird. Dennoch ist es denkbar, diese Berechnung durch die Analogschaltung zu realisieren.

Daneben betrifft die Erfindung einen Stromrichter, umfassend einen Zwischenkreiskondensator, eine Entladeeinrichtung, mittels welcher der Zwischenkreiskondensator entladbar ist und die einen Lastwiderstand und einen zum Lastwiderstand in Reihe geschaltetes Schaltelement aufweist, und eine die Entladeeinrichtung ansteuernde erfindungsgemäße Steuerungseinrichtung.

Ferner betrifft die Erfindung ein Fahrzeug, insbesondere ein Elektrofahrzeug oder ein Hybridfahrzeug, umfassend einen Elektromotor zum Antreiben des Fahrzeugs und einen erfindungsgemäßen Stromrichter, der zur elektrischen Versorgung des Elektromotors eingerichtet ist.

Die Erfindung betrifft schließlich ein Verfahren zum Entladen eines Zwischenkreiskondensators gemäß Anspruch 12.

Alle Ausführungen zur erfindungsgemäßen Steuerungseinrichtung lassen sich analog auf den erfindungsgemäßen Stromrichter, das erfindungsgemäße Fahrzeug und das erfindungsgemäße Verfahren übertragen, sodass die vorgenannten Vorteile auch mit diesen erzielt werden können.

Weitere Vorteile und Einzelheiten der vorliegenden Erfindung ergeben sich aus den im folgenden beschriebenen Ausführungsbeispielen und den Zeichnungen. Diese sind schematische Darstellungen und zeigen:

Fig. 1 ein Schaltbild eines ersten Ausführungsbeispiels einer erfindungsgemäßen Steuerungseinrichtung,

Fig. 2 ein Blockschaltbild eines nicht erfindungsgemäßen Vergleichsbeispiels der Steuerungseinrichtung,

Fig. 3 ein Blockschaltbild eines Ausführungsbeispiels eines erfindungsgemäßen Fahrzeugs mit einem Ausführungsbeispiel eines erfindungsgemäßen Stromrichters.

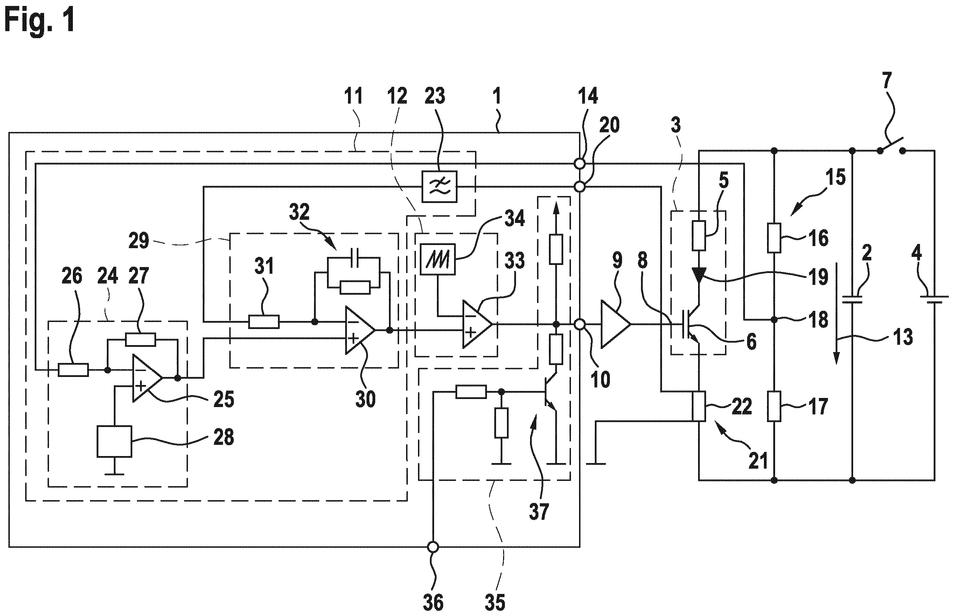

Fig. 1 ist ein Schaltbild eines ersten Ausführungsbeispiels einer Steuerungseinrichtung 1 zum Entladen eines Zwischenkreiskondensators 2 mittels einer Entladeeinrichtung 3.

Der Zwischenkreiskondensator 2 wird von einer Gleichspannungsquelle 4 elektrisch versorgt und kann insbesondere parallel zu einer Leistungseinheit eines Stromrichters geschaltet sein, um transiente Ströme zu glätten. Die Entladeeinrichtung 3 dient zum aktiven Entladen des Zwischenkreiskondensators 2 innerhalb einer vorgegebenen Zeit von beispielsweise zwei Sekunden unterhalb eines vorgegebenen Spannungsschwellwert von beispielsweise 60 V, wenn ein Entladeereignis vorliegt. Dazu weist die Entladeeinrichtung 3 einen Lastwiderstand 5 und ein mit diesem in Reihe geschaltetes Schaltelement 6 in Form eines elektronischen Schalters, beispielsweise eines IGBT oder eines Leistungs-MOSFET, auf. Zum Entladen wird der Zwischenkreiskondensator 2 typischerweise mittels einer Schalteinrichtung 7 ein- oder zweipolig von der Gleichspannungsquelle 4 getrennt.

Der Entladevorgang des Zwischenkreiskondensators 2 wird von der Steuerungseinrichtung 1 gesteuert. Dazu ist ein Steueranschluss 8 der Entladeeinrichtung 3 bzw. des Schaltelements 6 über eine Treibereinheit 9 mit einem Ausgang 10 der Steuerungseinrichtung 1 verbunden. Die Treibereinheit 9 verstärkt ein Ansteuersignal am Ausgangs 10 derart, dass das Schaltelement 6 entweder durchschaltet, sodass ein den Zwischenkreiskondensator 2 entladender Strom 19 durch den Lastwiderstand 5 fließt, oder sperrt.

Die Steuerungseinrichtung 1 weist eine Steuerungseinheit 11 und eine Generatoreinheit 12 auf, die zum Erzeugen eines pulsweitenmodulierten Ansteuersignals für das Schaltelement am Ausgang 10 mit einem Tastverhältnis, das durch die Steuerungseinheit 11 ermittelt wird, eingerichtet ist.

Die Steuerungseinheit 11 ist dabei dazu eingerichtet, das Tastverhältnis derart zu ermitteln, dass ein durch den Lastwiderstand 5 im zeitlichen Mittel fließender Entladestrom eine im Wesentlichen konstante elektrische Leistungsaufnahme durch den Lastwiderstand 5 bewirkt. Dies ermöglicht eine im Wesentlichen konstante elektrische und thermische Belastung des Lastwiderstands 5. Gleichzeitig wird auch das Schaltelement 6 lediglich voll durchgesteuert bzw. sperrend, mithin außerhalb eines aktiven bzw. verstärkenden Bereichs, betrieben. So wird die Leistungsaufnahme des Schaltelements 6 minimiert, um es im Vergleich zu einer Längsregelung des durch den Lastwiderstand 5 fließenden Stroms 19 auf wesentlich geringere Leistungsanforderungen auslegen zu können.

Die Steuerungseinheit 11 weist eine Sollwertermittlungseinheit 24 auf, die zum Ermitteln eines Entladestromsollwerts in Abhängigkeit einer eine über dem Zwischenkreiskondensator abfallenden Zwischenkreisspannung 13 beschreibenden Spannungsinformation eingerichtet ist. Dazu weist die Steuerungseinrichtung 1 einen ersten Eingang 14 auf, über den sie die Spannungsinformation enthält. Der erste Eingang 14 ist dazu im vorliegenden Ausführungsbeispiel mit einer Spannungserfassungseinrichtung 15 verbunden. Diese ist als ein parallel zum Zwischenkreiskondensator 2 geschalteter Spannungsteiler ausgebildet, dessen Widerstandselemente 16, 17 die hohe Zwischenkreisspannung 13 in eine dazu proportionale Spannung an einem Abgriff 18 eines Spannungsteilers teilen. Dabei kann das Widerstandselement 16 beispielsweise einen Widerstand von 500 k$\Omega$ und das Widerstandselement 17 einen Widerstand von 820 $\Omega$ realisieren, wobei die Widerstandselemente 16, 17 jeweils durch ein Widerstandsbauelement oder eine Vielzahl von zusammengeschalteten Widerstandsbauelementen gebildet sind.

Zur Ermittlung des Stromsollwerts erhält die Sollwertermittlungseinheit 24 die am ersten Eingang 14 bereitgestellte Spannungsinformation. Die Sollwertermittlungseinheit 24 umfasst einen Operationsverstärker 25, der die durch die Spannungsinformation beschriebene Zwischenkreisspannung 13 invertiert, also deren Negativwert bildet, und einer so gewonnenen Inversen der Zwischenkreisspannung 13 einen festen Offset hinzufügt. Dazu ist der Operationsverstärker 25 mittels zweier Widerstände 26, 27, beispielsweise mit einen jeweiligen Widerstandswert von 20 k$\Omega$, am negativen Eingang als invertierender Verstärker und mit einer Konstantspannungsquelle 28 am positiven Eingang beschaltet. Auf diese Weise erfolgt eine Entladung der Zwischenkreiskondensators 2 derart, dass der Strom 19 durch den Lastwiderstand 5 so gewählt ist, dass die quadratische Abhängigkeit der vom Lastwiderstand 5 aufgenommenen Leistung von der über ihm abfallenden Spannung weitestgehend kompensiert wird.

Daneben ist die Steuereinheit 11 dazu eingerichtet, das Tastverhältnis in Abhängigkeit einer einen zeitlichen Mittelwerts des Stroms 19 durch den Lastwiderstand 5 beschreibenden Strominformation zu ermitteln. Zur Ermittlung der Strominformation erhält die Steuerungseinrichtung 1 einen Strommesswert über einen zweiten Eingang 20, der mit einer zur Entladeeinrichtung 3 in Reihe geschalteten Stromerfassungseinrichtung 21 verbunden ist. Diese ist im vorliegenden Ausführungsbeispiel durch einen Nebenschlusswiderstand 22 gebildet. Da der Strommesswert den durch das Schalten des Schaltelements 6 getakteten Strom 19 beschreibt, ist dem zweiten Eingang 20 eine Tiefpasseinheit 23, beispielsweise in Form eines RC-Glieds, nachgeschaltet. Diese konditioniert den Strommesswert so, dass die Strominformation proportional zu einem kurzzeitigen gleitenden oder gewichteten Mittelwert des Stroms 19 bereitgestellt wird.

Zur Regelung des Tastverhältnisses weist die Steuereinheit 11 eine Reglereinheit 29 auf, welche zum Ermitteln des Tastverhältnisses in Abhängigkeit einer Abweichung des zeitlichen Mittels des Stroms 19 vom Entladestromsollwert eingerichtet ist. Im vorliegenden Ausführungsbeispiel realisiert die Reglereinheit 29 die Ermittlung der Abweichung und ein PI-Regelverhalten. Dazu weist die Reglereinheit 29 einen Operationsverstärker 30 auf, der mit zwei Impedanzen 31, 32 an seinem negativen Eingang und mit dem Ausgangssignal der Sollwertermittlungseinheit 24 an seinem positiven Ausgang beschaltet ist. Die Realisierung der Impedanzen 31, 32 in Fig. 1 ist rein exemplarisch. Die Impedanz 31 beträgt zum Beispiel 20 kΩ und die Impedanz 32 ist beispielsweise durch einen Widerstand mit einem Widerstandswert von 100 kΩ parallel zu einer Kapazität von 1 nF gebildet. Alternativ weist die Reglereinheit 29 ein P-Regelverhalten oder ein PID-Regelverhalten auf.

Alternativ werden das Ausgangssignal der Sollwertermittlungseinheit 24 und die Strominformation zunächst einer Subtrahierereinheit (nicht gezeigt), beispielsweise einem Differenzverstärker oder einem als Subtrahierer beschalteten Operationsverstärker, der Reglereinheit 29 und das Ausgangssignal der Subtrahierereinheit dem negativen Eingang des Operationsverstärkers 30 zugeführt. Dabei ist der positive Eingang des Operationsverstärkers 30 mit einem Massepotential verbunden.

Das Ausgangssignal der Reglereinheit 29 wird der Generatoreinheit 12 zugeführt. Diese umfasst einen Komparator 33, dessen positiver Eingang das Ausgangssignal der Reglereinheit 29 erhält und dessen negativer Eingang mit einem Signalgenerator 34 verbunden ist, der beispielsweise eine Sägezahn- oder eine

Dreiecksspannung zur Erzeugung des pulsweitenmodulierten Ausgangssignals am Ausgang 10 generiert.

Darüber hinaus weist die Steuerungseinrichtung 1 eine Deaktivierungseinheit 35 auf, mittels der die Ausgabe des Ansteuerungssignals am Ausgang 10 in Abhängigkeit eines Deaktivierungssignals an einem dritten Eingang 36 des Steuereinrichtung 1 deaktivierbar ist. Dazu weist die Deaktivierungseinheit 35 eine Transistorschaltung 37 auf, mittels der der Ausgang 10 in Abhängigkeit des Deaktivierungssignals über einen Widerstand auf ein Massepotential schaltbar ist, sodass das Schaltelement 6 der Entladeeinrichtung 3 dauerhaft sperrt und eine Entladung des Zwischenkreiskondensators 2, insbesondere in einem Normalbetrieb, unterbleibt. Sperrt die Transistorschaltung 37, wird das Ansteuersignal zum Ausgang 10 durchgelassen.

Im vorliegenden Ausführungsbeispiel sind sowohl die Steuereinheit 11 als auch die Generatoreinheit 12 als Analogschaltung ausgebildet. Alternativ kann die Steuereinheit 11 und/oder die Generatoreinheit 12 auch als Mikrocontroller ausgebildet sein.

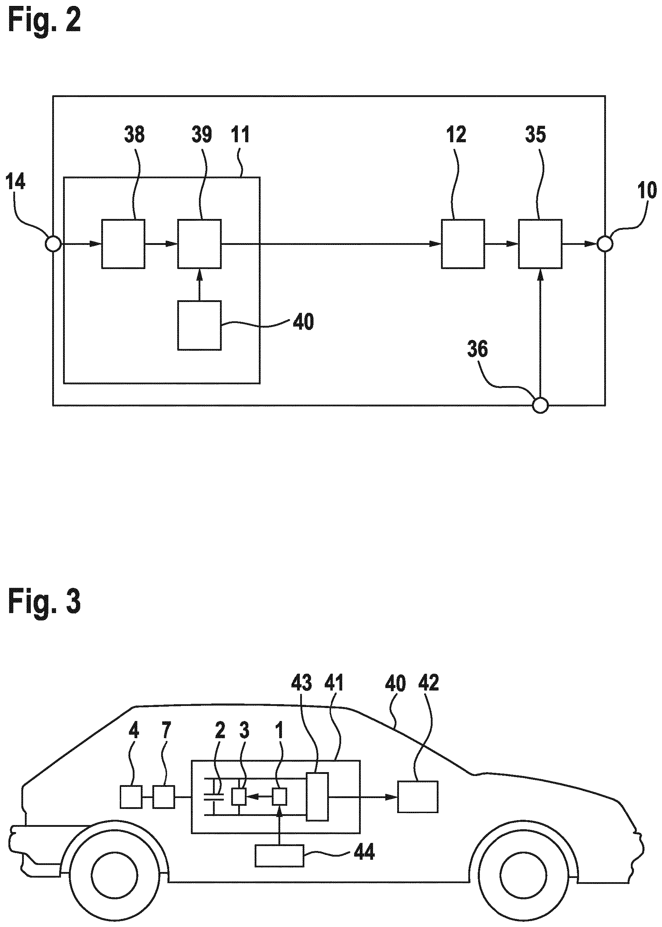

Fig. 2 ist ein Blockschaltbild eines Vergleichsbeispiels einer Steuerungseinrichtung 1, die dem zuvor beschriebenen Ausführungsbeispiel bis auf die folgenden Änderungen entspricht und bei der gleiche oder gleichwirkende Komponenten mit identischen Bezugszeichen versehen sind:

Die Steuereinheit 11 ist hier dazu eingerichtet, das Tastverhältnis direkt aus dem Verhältnis des Produkts des Widerstandswerts des Lastwiderstands 5 und seiner gewünschten Leistungsaufnahme zum Quadrat der Zwischenkreisspannung 13 zu berechnen. Dazu weist die Steuereinheit 11 eine Quadrieereinheit 38 auf, welche die durch die Spannungsinformation am ersten Eingang 14 erhaltende Zwischenkreisspannung 13 quadriert. Das Ausgangssignal der Quadrieereinheit 38 wird einer Dividiereinheit 39 zugeführt, die von einer Speichereinheit 40 ein das Produkt des Lastwiderstands 5 und der gewünschten Leistungsaufnahme beschreibendes Signal erhält und dieses durch das Ausgangssignal der Quadrieereinheit 28 teilt. Das Ausgangssignal der Dividiereinheit 39 beschreibt dann das Tastverhältnis, das eine im Wesentlichen konstante Leistungsaufnahme des Lastwiderstands 5 verursacht und der Generatoreinheit 12 zugeführt wird. Formelmäßig ausgedrückt ergibt sich so aus dem Widerstand R und der gewünschten Leistungsaufnahme P für das Tastverhältnis D:

$$D = \frac{R \cdot P}{U^2}$$

Um die Berechnung des Tastverhältnisses einfach zu gestalten, sind die Steuereinheit 11 und die Generatoreinheit 12 im Vergleichsbeispiel als Mikrocontroller ausgebildet, wobei die Quadrieereinheit 38 und die Dividiereinheit 39 durch geeignete Softwareroutinen des Mikrocontrollers realisiert sind. Es ist alternativ auch möglich, die Quadrierereinheit 38 und die Dividierereinheit 39 durch geeignete analoge Rechenschaltungen zu realisieren.

Fig. 3 ist ein Blockschaltbild eines Ausführungsbeispiels eines Fahrzeugs 40 mit einem Ausführungsbeispiel eines Stromrichters 41, welcher zur elektrischen Versorgung eines Elektromotors 42 zum Antreiben des Fahrzeugs 40 eingerichtet ist. Gleiche oder gleichwirkende Komponenten sind dabei mit gleichen Bezugszeichen wie in den Fig. 1 und 2 versehen.

Der Stromrichter 41 umfasst einen Zwischenkreiskondensator 2 und eine Entladeeinrichtung 3, mittels welcher der Zwischenkreiskondensator 2 entladbar ist, und eine die Entladeeinrichtung 3 ansteuernde Steuerungseinrichtung 1 gemäß dem vorgenannten Ausführungsbeispiel. Dazu wird der Zwischenkreiskondensator 2 von einer Gleichspannungsquelle 4 in Form einer Hochvoltbatterie, die über eine Schalteinrichtung 7 mit der Gleichspannungsseite des Stromrichters 41 verbunden ist, versorgt. Der Stromrichter 41 weist ferner die eine Treibereinheit 9, eine Spannungserfassungseinrichtung 15 und eine Stromerfassungseinrichtung 21 auf, die in Fig. 3 aus Gründen der Übersichtlichkeit nicht einzeln dargestellt sind.

Der Zwischenkreiskondensator 2 glättet dabei transiente Ströme, die von einer Leistungseinheit 43 des Stromrichters 41 erzeugt werden. Die Leistungseinheit 43 wandelt die von der Gleichspannungsquelle 4 bereitgestellte Gleichspannung in einen mehrphasigen, insbesondere drei- oder sechsphasigen, Wechselstrom für den Elektromotor 42 und weist drei bzw. sechs parallel zum Zwischenkreiskondensator 2 geschaltete Halbbrücken aus jeweils zwei Leistungshalbleiterschaltelementen, die in Reihe geschaltet sind, auf.

Die Steuerungseinheit 1 erhält von einem Steuergerät 44 des Fahrzeugs 40 das Deaktivierungssignal. Das Steuergerät 44 ist zum Ermitteln, ob ein Entladeereignis, beispielsweise ein Unfall, ein Isolationsfehler oder ein Abstellen des Fahrzeugs 40 bzw. des Elektromotors 42 vorliegt, eingerichtet. Liegt ein solches Entladeereignis vor oder fällt das Deaktivierungssignal aus anderen Gründen weg, löst ein Signalzustandswechsel des Deaktivierungssignals bzw. ein Fehlen des Deaktivierungssignals am Eingang 36 das Entladen des Zwischenkreiskondensators 2 mittels der Entladeeinrichtung 3 aus.

**Patentansprüche**

1. Steuerungseinrichtung (1) zum Entladen eines Zwischenkreiskondensators (2) mittels einer Entladeeinrichtung (3) mit einem Lastwiderstand (5) und einem zum Lastwiderstand (5) in Reihe geschalteten Schaltelement (6), wobei die Steuerungseinrichtung (1)

   - eine Generatoreinheit (12), die zum Erzeugen eines pulsweitenmodulierten Ansteuersignals für das Schaltelement (6) mit einem ermittelten Tastverhältnis eingerichtet ist, und
   - eine Steuerungseinheit (11), die dazu eingerichtet ist, das Tastverhältnis in Abhängigkeit einer eine über dem Zwischenkreiskondensator (2) abfallende Zwischenkreisspannung beschreibenden Spannungsinformation derart zu ermitteln, dass im zeitlichen Mittel ein gewünschter Entladestrom durch den Lastwiderstand (5) fließt und mit sinkender Zwischenkreisspannung (13) ein größeres Tastverhältnis des Ansteuersignals vorgegeben wird, aufweist
   **dadurch gekennzeichnet, dass**
   die Steuerungseinheit (11) zum Ermitteln des Tastverhältnisses in Abhängigkeit einer Strominformation, die ein zeitliches Mittel eines durch den Lastwiderstand (5) fließenden Stroms (19) beschreibt, eingerichtet ist.

2. Steuerungseinrichtung nach Anspruch 1, wobei die Steuerungseinheit (11) dazu eingerichtet ist, das Tastverhältnis derart zu ermitteln, dass der Entladestrom eine im zeitlichen Mittel im Wesentlichen konstante Leistungsaufnahme durch den Lastwiderstand (5) bewirkt.

3. Steuerungseinrichtung nach Anspruch 1 oder 2, wobei die Steuerungseinheit (11) eine Sollwertermittlungseinheit (24) aufweist, die zum Ermitteln eines Entladestromsollwerts in Abhängigkeit der Spannungsinformation eingerichtet ist.

4. Steuerungseinrichtung nach Anspruch 3, wobei die Sollwertermittlungseinheit (24) dazu eingerichtet ist, den Entladestromsollwert in Abhängigkeit einer Inversen der Zwischenkreisspannung (13) zu ermitteln.

5. Steuerungseinrichtung nach Anspruch 4, wobei die Sollwertermittlungseinheit (24) dazu eingerichtet ist, den Entladestromsollwert als Summe aus der Inversen und einem Offset zu ermitteln.

6. Steuerungseinrichtung nach einem der Ansprüche 3 bis 5, wobei die Steuerungseinheit (11) eine Reglereinheit (29) umfasst, welche zum Ermitteln des Tastverhältnisses in Abhängigkeit einer Abweichung des zeitlichen Mittels des Stroms (19) vom Entladestromsollwert eingerichtet ist.

7. Steuerungseinrichtung nach einem der vorhergehenden Ansprüche, welche eine Tiefpasseinheit (23) umfasst, die zum Erzeugen der Strominformation aus einem den momentanen Strom (19) beschreibenden Strommesswert eingerichtet ist.

**8.** Steuerungseinrichtung nach einem der vorhergehenden Ansprüche, wobei die Steuerungseinheit (11) als Analogschaltung oder als Mikroprozessor ausgebildet ist.

**9.** Stromrichter (41), umfassend einen Zwischenkreiskondensator (2), eine Entladeeinrichtung (3), mittels welcher der Zwischenkreiskondensator (2) entladbar ist und die einen Lastwiderstand (5) und ein zum Lastwiderstand (5) in Reihe geschaltetes Schaltelement (6) aufweist, und eine die Entladeeinrichtung (3) ansteuernde Steuerungseinrichtung (1) nach einem der Ansprüche 1 bis 8.

**10.** Stromrichter nach Anspruch 9, wobei die Steuerungseinrichtung (1) einen Eingang (14) zum Erhalten der Spannungsinformation aufweist und der Stromrichter (41) ferner eine Spannungserfassungseinrichtung (15), mit welcher der Eingang (14) verbunden ist, umfasst.

**11.** Fahrzeug (40), umfassend einen Elektromotor (42) zum Antreiben des Fahrzeugs (40) und einen Stromrichter (41) nach Anspruch 9 oder 10, der zur elektrischen Versorgung des Elektromotors (42) eingerichtet ist.

**12.** Verfahren zum Entladen eines Zwischenkreiskondensators (2) mittels einer Entladeeinrichtung (3) mit einem Lastwiderstand (5) und einem zum Lastwiderstand (5) in Reihe geschalteten Schaltelement (6), wobei ein pulsweitenmoduliertes Ansteuersignal für das Schaltelement (6) mit einem ermittelten Tastverhältnis erzeugt wird und das Tastverhältnis in Abhängigkeit einer eine über dem Zwischenkreiskondensator (2) abfallende Zwischenkreisspannung beschreibenden Spannungsinformation derart, dass im zeitlichen Mittel ein gewünschter Entladestrom durch den Lastwiderstand (5) fließt und mit sinkender Zwischenkreisspannung (13) ein größeres Tastverhältnis des Ansteuersignals vorgegeben wird, und in Abhängigkeit einer Strominformation, die ein zeitliches Mittel eines durch den Lastwiderstand (5) fließenden Stroms (19) beschreibt, ermittelt wird.

**Claims**

**1.** A control device (1) for discharging an intermediate circuit capacitor (2) by means of a discharge device (3) having a load resistor (5) and a switching element (6) connected in series with the load resistor (5), wherein the control device (1) comprises

- a generator unit (12) which is configured to generate a pulse-width-modulated control signal for the switching element (6) with a determined duty cycle, and

- a control unit (11) which is configured to determine the duty cycle as a function of voltage information describing an intermediate circuit voltage dropping across the intermediate circuit capacitor (2) such that a desired discharge current flows through the load resistor (5) on a time average and a larger duty cycle of the control signal is specified as the intermediate circuit voltage (13) decreases,

**characterized in that** the control unit (11) is configured to determine the duty cycle as a function of current information which describes a time average of a current (19) flowing through the load resistor (5).

**2.** The control device according to claim 1, wherein the control unit (11) is configured to determine the duty cycle such that the discharge current causes an essentially constant power consumption by the load resistor (5) on a time average.

**3.** The control device according to claim 1 or 2, wherein the control unit (11) comprises a setpoint determination unit (24) which is configured to determine a discharge current setpoint as a function of the voltage information.

**4.** The control device according to claim 3, wherein the setpoint determination unit (24) is configured to determine the discharge current setpoint as a function of an inverse of the intermediate circuit voltage (13).

**5.** The control device according to claim 4, wherein the setpoint determination unit (24) is configured to determine the discharge current setpoint as a sum of the inverse and an offset.

**6.** The control device according to any one of claims 3 to 5, wherein the control unit (11) comprises a regulator unit (29) which is configured to determine the duty cycle as a function of a deviation of the time average of the current (19) from the discharge current setpoint.

**7.** The control device according to any one of the preceding claims, which comprises a lowpass unit (23) which is configured to generate the current information from a measured current value describing the instantaneous current (19).

**8.** The control device according to any one of the preceding claims, wherein the control unit (11) is designed as an analog circuit or as a microprocessor.

**9.** A power converter (41), comprising an intermediate circuit capacitor (2), a discharge device (3) by means of which the intermediate circuit capacitor (2) can be discharged and which has a load resistor (5) and a switching element (6) connected in series with the load resistor (5), and a control device (1) according to any one of claims 1 to 8 that controls the discharge device (3).

10. The power converter according to claim 9, wherein the control device (1) has an input (14) for receiving the voltage information and the power converter (41) further comprises a voltage detection device (15) to which the input (14) is connected.

11. A vehicle (40), comprising an electric motor (42) for driving the vehicle (40) and a power converter (41) according to claim 9 or 10, which is configured for the electrical supply of the electric motor (42).

12. A method for discharging an intermediate circuit capacitor (2) by means of a discharge device (3) having a load resistor (5) and a switching element (6) connected in series with the load resistor (5), wherein a pulse-width-modulated control signal for the switching element (6) is generated with a determined duty cycle and the duty cycle is determined as a function of voltage information describing an intermediate circuit voltage dropping across the intermediate circuit capacitor (2) such that a desired discharge current flows through the load resistor (5) on a time average and a larger duty cycle of the control signal is specified as the intermediate circuit voltage (13) decreases, and is determined as a function of current information which describes a time average of a current (19) flowing through the load resistor (5).

**Revendications**

1. Dispositif de commande (1) pour décharger un condensateur de circuit intermédiaire (2) au moyen d'un dispositif de décharge (3) comportant une résistance de charge (5) et un élément de commutation (6) monté en série avec la résistance de charge (5), dans lequel le dispositif de commande (1) présente

     - une unité de génération (12) qui est configurée pour générer un signal de commande à modulation de largeur d'impulsion pour l'élément de commutation (6) avec un rapport cyclique déterminé, et
     - une unité de commande (11) qui est configurée pour déterminer le rapport cyclique en fonction d'une information de tension décrivant une tension de circuit intermédiaire chutant aux bornes du condensateur de circuit intermédiaire (2) de telle sorte qu'en moyenne temporelle, un courant de décharge souhaité circule à travers la résistance de charge (5) et un rapport cyclique plus important du signal de commande soit spécifié avec une tension de circuit intermédiaire (13) décroissante,

**caractérisé en ce que** l'unité de commande (11) est configurée pour déterminer le rapport cyclique en fonction d'une information de courant qui décrit une moyenne temporelle d'un courant (19) circulant à travers la résistance de charge (5).

2. Dispositif de commande selon la revendication 1, dans lequel l'unité de commande (11) est configurée pour déterminer le rapport cyclique de telle sorte que le courant de décharge provoque une consommation de puissance par la résistance de charge (5) qui est sensiblement constante en moyenne temporelle.

3. Dispositif de commande selon la revendication 1 ou 2, dans lequel l'unité de commande (11) présente une unité de détermination de valeur de consigne (24) qui est configurée pour déterminer une valeur de consigne de courant de décharge en fonction de l'information de tension.

4. Dispositif de commande selon la revendication 3, dans lequel l'unité de détermination de valeur de consigne (24) est configurée pour déterminer la valeur de consigne de courant de décharge en fonction d'un inverse de la tension de circuit intermédiaire (13).

5. Dispositif de commande selon la revendication 4, dans lequel l'unité de détermination de valeur de consigne (24) est configurée pour déterminer la valeur de consigne de courant de décharge comme somme de l'inverse et d'un décalage.

6. Dispositif de commande selon l'une des revendications 3 à 5, dans lequel l'unité de commande (11) comprend une unité de régulation (29) qui est configurée pour déterminer le rapport cyclique en fonction d'un écart de la moyenne temporelle du courant (19) par rapport à la valeur de consigne de courant de décharge.

7. Dispositif de commande selon l'une des revendications précédentes, qui comprend une unité passe-bas (23) qui est configurée pour générer l'information de courant à partir d'une valeur de mesure de courant décrivant le courant (19) instantané.

8. Dispositif de commande selon l'une des revendications précédentes, dans lequel l'unité de commande (11) est conçue comme un circuit analogique ou comme un microprocesseur.

9. Convertisseur de puissance (41), comprenant un condensateur de circuit intermédiaire (2), un dispositif de décharge (3) au moyen duquel le condensateur de circuit intermédiaire (2) peut être déchargé et qui présente une résistance de charge (5) et un élément de commutation (6) monté en série avec la résistance de charge (5), et un dispositif de commande (1) selon l'une des revendications 1 à 8, qui commande le dispositif de décharge (3).

10. Convertisseur de puissance selon la revendication 9, dans lequel le dispositif de commande (1) présente une entrée (14) pour recevoir l'information de tension et le convertisseur de puissance (41) comprend en outre un dispositif de détection de tension (15) auquel l'entrée (14) est connectée.

11. Véhicule (40), comprenant un moteur électrique (42) pour entraîner le véhicule (40) et un convertisseur de puissance (41) selon la revendication 9 ou 10, qui est configuré pour l'alimentation électrique du moteur électrique (42).

12. Procédé pour décharger un condensateur de circuit intermédiaire (2) au moyen d'un dispositif de décharge (3) comportant une résistance de charge (5) et un élément de commutation (6) monté en série avec la résistance de charge (5), dans lequel un signal de commande à modulation de largeur d'impulsion pour l'élément de commutation (6) est généré avec un rapport cyclique déterminé et le rapport cyclique est déterminé en fonction d'une information de tension décrivant une tension de circuit intermédiaire chutant aux bornes du condensateur de circuit intermédiaire (2) de telle sorte qu'en moyenne temporelle, un courant de décharge souhaité circule à travers la résistance de charge (5) et un rapport cyclique plus important du signal de commande soit spécifié avec une tension de circuit intermédiaire (13) décroissante, et est déterminé en fonction d'une information de courant qui décrit une moyenne temporelle d'un courant (19) circulant à travers la résistance de charge (5).

Fig. 1

# Fig. 2

# Fig. 3

# EP 3 815 230 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2013234510 A1
- CN 102437771 A
- DE 102012203073 A1
- US 2011260661 A1
- DE 102013224884 A1